# EUROPÄISCHE PATENTSCHRIFT

(11) **EP 3 081 275 B1**
(45) Veröffentlichungstag und Bekanntmachung des Hinweises auf die Patenterteilung: **13.11.2019**
(21) Anmeldenummer: 16161858.2
(22) Anmeldetag: 23.03.2016
(51) Int. Cl.: A63H 33/10

(54) **VERBINDUNGSSYSTEM ZUM LÖSBAREN VERBINDEN VON BAUTEILEN UND BAUSATZ MIT EINEM SOLCHEN**
CONNECTION SYSTEM FOR REVERSIBLE CONNECTION OF COMPONENTS AND MODULAR SET COMPRISING SAME
SYSTEME DE LIAISON POUR RELIER DE MANIERE AMOVIBLE DES COMPOSANTS ET UN KIT

(30) Priorität: 24.03.2015 EP 15160618
(43) Veröffentlichungstag der Anmeldung: 19.10.2016
(73) Patentinhaber: Revell GmbH, 32257 Bünde (DE)
(72) Erfinder: Rosenbohm, Carsten, 60594 Frankfurt am Main (DE)
(74) Vertreter: Rupprecht, Kay

(56) Entgegenhaltungen:
- EP-A1- 0 942 182
- WO-A1-95/31646
- WO-A1-2015/028415
- CA-A- 1 061 613
- CN-A- 104 349 825
- DE-A1- 1 965 107
- DE-A1- 3 311 223
- GB-A- 1 013 219
- US-A- 2 335 769
- US-A- 3 425 314
- US-A- 3 703 120
- US-A- 4 990 044

## Beschreibung

Die Erfindung betrifft ein Verbindungssystem zum lösbaren Verbinden von Bauteilen. Ferner betrifft die Erfindung Verwendung des Verbindungssystems.

Unter den zu verbindenden Bauteilen sollen erfindungsgemäß Komponenten jeglicher Art zu verstehen sein, welche lösbar zusammengesetzt oder kraft- und/oder formschlüssig miteinander verbunden werden sollen. Beispielsweise ist hier an die Verbindung eines Rads mit der Radnabe eines Fahrzeugs zu denken, aber beispielsweise allgemein auch an die Verbindung jeglicher Art von Bauteilen miteinander, die anhand einer rotatorischen Bewegung eines Schlüsselelementes im Zusammenwirken mit einem Schraubelement herstellbar ist. Im Beispiel des Rads und der Radnabe ist das Schraubelement eine Radmutter, die mit dem Schlüsselelement eindreh- und festziehbar ist. Denkbar ist auch die Befestigung einer Fassadenplatte an einem Gebäude oder die Verbindung von Regalbauteilen eines Möbelbausatzes.

Bausätze und insbesondere technische Modellbausätze zum Zusammenbau von miniaturisierten Fahrzeug-, Schiff- und Flugmodellen sind bekannt. Oftmals erfolgt der Zusammenbau einzelner Teile der Bausätze mit Hilfe von Klebemitteln. Auch das Zusammenschrauben einzelner Bauteile ist bekannt. Die bislang bekannten Zusammenbaumethoden im Bereich der Bausätze verlangen zumindest ein Grundmaß an technischem Geschick. Bislang eignen sich beispielsweise technische Bausätze nicht zur Verwendung von jüngeren Kindern.

Ein Verbindungssystem ist zum Beispiel aus US-3 425 314 bekannt. Die Aufgabe der vorliegenden Erfindung ist es, ein vereinfachtes Verbindungssystem anzugeben, so dass insbesondere auch jüngere Kinder, Bauteile lösbar miteinander verbinden können.

Erfindungsgemäß wird diese Aufgabe im Hinblick auf das Verbindungssystem durch den Gegenstand des Patentanspruchs 1 und ein Bausatz mit einem Verbindungssystem gemäß Anspruch 16 sowie dessen Verwendung durch den nebengeordneten Patentanspruch 17 gelöst. Vorteilhafte und zweckmäßige Ausgestaltungen des erfindungsgemäßen Verbindungssystems sind in den Unteransprüchen angegeben.

Das erfindungsgemäße Verbindungssystem zum lösbaren Verbinden von Bauteilen ist vorgesehen mit einem Schlüsselelement, das einen Kraftübertragungskopf aufweist, und einem Schraubelement, das einen Kraftübernahmekopf aufweist. Der Kraftübertragungskopf und der Kraftübernahmekopf sind anhand zueinander korrespondierend ausgestalteter Formen miteinander verbindbar. Vorteilhafterweise ist es somit möglich, das Schüsselelement und das Schraubelement bedarfsweise miteinander zu verbinden, um eine Kraftübertragung vom Schlüsselelement auf das Schraubelement zu ermöglichen.

Im Sinne der vorliegenden Erfindung ist vorgesehen, dass ein Anwender des Verbindungssystems eine rotatorische Kraft mit Hilfe des Schlüsselelementes ausübt, um mit dem Verbindungssystem Bauteile lösbar miteinander zu verbinden. Vorzugsweise ist das Schraubelement in der Grundform einer Schraube und das Schlüsselelement in der Grundform eines Schraubenziehers ausgestaltet. Das Schlüsselelement kann jedoch auch mit einem winkelförmigen oder andersartig geformten Handgriff versehen sein. Ferner kann das Schraubelement derart ausgestaltet sein, dass es zur Herstellung einer Rastverbindung, einer Klickverbindung oder vergleichbarer, durch rotatorische Bewegung herstellbarer Verbindungen geeignet ist. Die rotatorische Kraft wird über das Schlüsselelement bzw. den Kraftübertragungskopf auf das Schraubelement bzw. den Kraftübernahmekopf übertragen. Auf diese Weise ist die rotatorische Kraft zur Herstellung einer lösbaren Verbindung vom Anwender aus in das Verbindungssystem und die zu verbindenden Bauteilen einleitbar.

Ferner weist wenigstens der Kraftübertragungskopf des Schlüsselelementes ein erstes Material auf und wenigstens der Kraftübernahmekopf des Schraubelementes ein zweites Material auf. Das erste Material und das zweite Material sind vorzugsweise derart ausgewählt, dass der Kraftübertragungskopf und/oder der Kraftübernahmekopf beim Aufbringen einer Kraft zur Rotation des Schlüsselelementes, die größer ist als eine definierbare Maximalkraft, reversibel verformbar sind bzw. ist. Vorteilhafterweise wird somit ein Überlastschutz bzw. Überdrehschutz durch das erfindungsgemäße Verbindungssystem zur Verfügung gestellt. Die beteiligten Komponenten des Verbindungssystems bzw. die zu verbindenden Komponenten können beim Zusammensetzen nicht beschädigt werden.

Eine reversible Verformung ist im Sinne der vorliegenden Erfindung derart zu verstehen, dass eine elastische Auslenkung bzw. Gestaltänderung einer Geometrie erfolgt, wobei nach Auflösung des Belastungszustandes eine vollständige Rückformung bzw. Rückstellung der Geometrie in ihren Ausgangszustand stattfindet, um eine langfristige Nutzung des erfindungsgemäßen Verbindungssystem zu ermöglichen. Vorteilhafterweise ist das Verbindungssystem derart ausgestaltet, dass eine rotatorische Kraft, die größer als die definierbare Maximalkraft ist, nicht auf das Schraubelement übertragbar ist. Einer Beschädigung der Bauteile und der Komponenten des Verbindungssystems wird vorgebeugt, indem nur Rotationskräfte auf das Schraubelement übertragbar sind, für die die einzelnen Komponenten ausgelegt sind.

Das Schlüsselelement weist das erste Material wenigstens an dem Kraftübertragungskopf auf, kann aber auch zu größeren Teilen oder vollständig aus dem ersten Material bestehen. Das Schraubelement weist das zweite Material wenigstens an dem Kraftübernahmekopf auf, kann aber auch zu größeren Teilen oder vollständig aus dem zweiten Material bestehen. Ferner kann eine reversible Verformung des Kraftübertragungskopfes, des Kraftübernahmekopfes oder beider Komponenten erfolgen. Es ist das Ziel, den Kraftübertragungskopf und den Kraftübernahmekopf mit dem ersten Material und dem zweiten Material derart auszugestalten, dass eine zu große Rotationskraft nicht von dem Schlüsselelement auf das Schraubelement übertragbar ist.

Das erste Material kann ein härteres bzw. geringer verformbares bzw. schwerer verformbares Material sein als das zweite Material. Gleichfalls kann das zweite Material ein härteres bzw. geringer verformbares bzw. schwerer verformbares Material sein als das erste Material. Das erste Material und das zweite Material können Metalle, Polymere, Komposite, Legierungen oder vergleichbare Materialien bzw. Materialverbindungen/-kombinationen aufweisen. So ist im Sinne der vorliegenden Erfindung eine Vielzahl verschiedener Materialpaarungen für das erste und zweite Material vorstellbar, um zweckmäßige und im Sinne der vorliegenden Erfindung korrespondierende mechanische Eigenschaften zu erhalten.

Sobald die lösbare Verbindung zweier Bauteile mit Hilfe des Schraubelementes erfolgt ist und der Anwender weiter Rotationskräfte, die die vorbestimmte Maximalkraft überschreiten, mit dem Schlüsselelement auf das Schraubelement überträgt, findet eine reversible Verformung des Kraftübertragungskopfs und/oder des Kraftübernahmekopfes statt. Aufgrund der reversiblen Verformung rutschen der Kraftübertragungskopf und der Kraftübernahmekopf gegeneinander ab bzw. durch. So sind in diesem Fall keine weiteren Rotationskräfte von dem Schlüsselelement auf das Schraubelement übertragbar. Die Verbindungskraft des Schraubelementes zur lösbaren Verbindung zweier Bauteile kann nicht über die vorbestimmte Maximalkraft hinaus erhöht werden. Folglich bestimmt die definierbare Maximalkraft auch die maximale Verbindungskraft, die zur lösbaren Verbindung zweier Bauteile vorgesehen sein soll. Ein Überdrehen des Verbindungssystems, insbesondere des Schlüsselelementes und des Schraubelementes, ist nicht möglich. Folglich gewährleistet das erfindungsgemäße Verbindungssystem eine sichere Handhabung, bspw. auch bei der Verwendung durch ungeübte Personen oder Kinder niedrigen Alters.

Gemäß einer weiteren Ausführungsform der vorliegenden Erfindung ist die reversible Verformung des Kraftübertragungskopfes und/oder des Kraftübernahmekopfes in wenigstens einem Kontaktbereich zwischen dem Kraftübertragungskopf und dem Kraftübernahmekopf erzeugbar. Der wenigstens eine Kontaktbereich beschreibt hierbei die Kontaktpunkte bzw. Kontaktflächen, entlang derer sich der Kraftübertragungskopf und der Kraftübernahmekopf gegenseitig berühren, sodass eine Rotationskraft von dem Schlüsselelement auf das Schraubelement übertragbar ist. Die reversible Verformung erfolgt vorteilhafterweise stets in den Bereichen des Kraftübertragungskopfes und/oder des Kraftübernahmekopfes, die an die Kontaktstellen zur Kraftübertragung angrenzen. Die Verformungsbereiche können sich nur oberflächlich erstrecken oder in die Tiefe des Materials des Kraftübertragungskopfes und/oder des Kraftübernahmekopfes hineinreichen. Somit ist der Umfang der reversiblen Verformung, unter anderem in Abhängigkeit vom ersten und zweiten Material, gezielt einstellbar.

In einer Ausführungsform der vorliegenden Erfindung weist das erste Material eine geringere Festigkeit auf, insbesondere eine geringere Druckfestigkeit und/oder eine geringere Torsionsfestigkeit, als das zweite Material oder das zweite Material weist eine geringere Festigkeit auf, insbesondere eine geringere Druckfestigkeit und/oder eine geringere Torsionsfestigkeit, als das erste Material. Insbesondere ist der mechanische Festigkeitskennwert eines Materials im Sinne der vorliegenden Erfindung unter Berücksichtigung des in der Materialwissenschaft bzw. Mechanik zugrundeliegenden, allgemeinen Sachverständnisses aufzufassen. So kann die Festigkeit des ersten und zweiten Materials hinsichtlich verschiedener Belastungsrichtungen und Belastungsformen verstanden werden bzw. unterschiedlich ausgeprägt sein.

Bei der Applikation einer rotatorischen Kraft auf das Verbindungssystem bzw. das Schlüsselelement in Verbindung mit dem Schraubelement, die größer ist als die zuvor festgelegte Maximalkraft, soll eine geringere Festigkeit des ersten oder zweiten Materials insbesondere dazu führen, dass sich eines der beiden Materialien wenigstens in den Kontaktbereichen stärker reversibel verformt als das andere Material. Vorteilhafterweise ist somit eine rotatorische Kraft ausschließlich bis zur Höhe der vordefinierten Maximalkraft mit dem erfindungsgemäßen Verbindungssystem applizierbar.

Gemäß einer weiteren Ausführungsform sind das erste Material und das zweite Material identisch. Es ist somit möglich, dass für das erste und zweite Material beispielsweise ein Polymer gewählt wird, um eine große, reversible Deformationen des Kraftübertragungskopfes und des Kraftübernahmekopfes beim Aufbringen einer Kraft oberhalb der Maximalkraft zu erzielen. Gleichfalls wird durch einen identischen Werkstoff für das erste und zweite Material die Herstellung des erfindungsgemäßen Verbindungssystems kosteneffizienter durchführbar.

In einer weiteren Ausführungsform weist der Kraftübertragungskopf und der Kraftübernahmekopf jeweils wenigstens zwei Seitenflächen auf. In dem Spezialfall zweier Seitenflächen wird im Sinne der vorliegenden Erfindung angenommen, dass zwei sich gegenüberstehende Seitenflächen an ihren beiden Enden jeweils über eine Rundung miteinander verbunden sind, sodass ein Volumenkörper ausgebildet wird. Weiterhin kann der Kraftübertragungskopf und, korrespondierend dazu, der Kraftübernahmekopf drei, vier oder mehr Seitenflächen aufweisen. Hinsichtlich der zueinander korrespondierenden Ausgestaltung des Kraftübertragungskopfes und des Kraftübernahmekopfes ist zu berücksichtigen, dass die eine Komponente die Seitenflächen an seinem Außenumfang und die andere Komponente die Seitenflächen an seinem Innenumfang aufweisen muss.

Ferner sind Kanten zwischen aneinander angrenzenden Seitenflächen abgerundet oder abgeflacht, sodass beim Aufbringen einer Kraft, die größer ist als die im Vorhinein bestimmte Maximalkraft, eine Rotation des Schlüsselelementes, insbesondere des Kraftübertragungskopfes, gegenüber dem Schraubelement, insbesondere gegenüber dem Kraftübernahmekopf, durchführbar ist. Vornehmlich ist hiermit gemeint, dass eine Rotation des Schlüsselelements anhand der abgerundeten bzw. abgeschrägten Kanten ermöglicht bzw. erleichtert wird sobald die vorbestimmte Maximalkraft überschritten wird. Das Schraubelement ist gegen die zu verbindenden Bauteile abgestützt und übt eine spezifische Verbindungskraft aus, insbesondere in Längsrichtung des Schraubelementes. Das Schraubelement kann somit gegenüber den zu verbindenden Bauteilen keine weitere Rotation durchführen, sobald eine maximale Verbindungskraft vorliegt. Beim Aufbringen einer rotatorischen Kraft oberhalb der Maximalkraft muss folglich eine Rotation des Schlüsselelementes gegenüber dem Schraubelement erfolgen, was im allgemeinen Sprachgebrauch als Durchrutschen bezeichnet wird. Die Ausgestaltung der Komponenten, also des Kraftübertragungskopfes und des Kraftübernahmekopfes, mit drei oder mehr Seitenflächen ist hierbei vorteilhaft um, unter Auftreten einer reversiblen Verformung, das Abgleiten der beiden Komponenten gegeneinander zu vereinfachen.

Gemäß der Erfindung ist die Verformung der sich gegenüberstehenden Flanken in der dem Schlitz zugewandten Richtung entspricht einer Verengung des wenigstens einen Schlitzes. Auch für den Fall, dass mehrere Schlitze vorgesehen sind, z.B. in kreuzförmiger Anordnung, erfolgt eine Verformung der sich gegenüberstehenden Flanken.

Es kann vorgesehen sein, dass sowohl der Kraftübertragungskopf als auch der Kraftübernahmekopf jeweils wenigstens einen Schlitz aufweist. Im Sinne der vorliegenden Erfindung ist es somit vorstellbar, ein erstes und zweites Material zu verwenden, die derart ausgestaltet sind, dass eine reversible Verformung vornehmlich aufgrund der geschlitzten Form des Kraftübertragungskopfes bzw. des Kraftübernahmekopfes erfolgt. Somit sind auch Materialien mit höheren Festigkeitskennwerten einsetzbar, um gegebenenfalls größere Rotationskräfte bzw. Drehmomente gezielt übertragen zu können.

In einer weiteren Ausführungsform ist an wenigstens einer der sich gegenüberstehenden Flanken des Kraftübertragungskopfes oder des Kraftübernahmekopfes ein Abstützelement in dem wenigstens einen Schlitz angeordnet, sodass eine reversible Verformung der wenigstens einen Flanke in Richtung des Schlitzes begrenzbar ist. Begrenzbar bedeutet im Sinne der vorliegenden Erfindung, dass eine reversible Verformung der sich gegenüberstehenden Flanken nicht über die gesamte Ausgestaltungsbreite des Schlitzes durchführbar ist. Die maximale Verformung, die der ausgestaltete Schlitz ermöglicht, wird folglich nicht vollständig genutzt, indem Abstützelemente derart vorgesehen werden, dass die maximale Verformung der sich gegenüberstehenden Flanken anhand der Abstützelemente reduziert wird, z.B. indem sich die Abstützelemente an den gegenüberstehenden Flanken berühren und gegeneinander abstützen.

Im Sinne der vorliegenden Erfindung ist es somit möglich, durch eine spezifische Ausgestaltung des wenigstens einen Schlitzes die Verformbarkeit der Flanken einzustellen und gleichzeitig den Umfang der Verformung anhand der Abstützelemente zu reduzieren, sodass beispielsweise keine irreversible Verformung erfolgen kann. Bei der Ausgestaltung des wenigstens einen Schlitzes ist die Verformbarkeit der Flanken anhand der Schlitzbreite und der Schlitztiefe bzw. der daraus resultierenden Flankenhöhe einstellbar. Die Adaption der maximalen Verformung der Flanken kann anhand der Form, Größe, Tiefe und Anordnung der Abstützelemente variiert werden. Vorteilhafterweise ist die reversible Verformung des Kraftübertragungskopfes und des Kraftübernahmekopfes somit gezielt einstellbar, um eine gewünschte Maximalkraft bzw. ein beliebiges maximales Drehmoment erzielen zu können.

Ferner ist in einer Ausführungsform der vorliegenden Erfindung vorgesehen, dass das erfindungsgemäße Verbindungssystem ein Verbindungselement aufweist. Auf vorteilhafte Weise können somit Bauteile bzw. Bausatzteile lösbar miteinander verbunden werden.

Das Verbindungselement beruht gemäß einer Ausführungsform auf einer Grundkonstruktion, mit einem Grundkörper, der ein erstes freies Ende und ein zweites Ende aufweist. Des Weiteren umfasst das Verbindungselement einen Anschlag, welcher mit dem zweiten Ende des Grundkörpers verbunden ist und diesen Grundkörper in seiner Breite und/oder in seiner Länge überragt.

Der Anschlag dient insbesondere zur lösbaren Befestigung des Verbindungselementes in bzw. an einem Bauteil eines Bausatzes. Um ein Verrutschen des Verbindungselementes zu vermeiden, weist der Anschlag eine Grundfläche auf, die zumindest minimal größer ist als der Querschnitt des Grundkörpers. Somit entstehen Anschlagsflächen, die zum Verrasten bzw. lösbaren Befestigen des Verbindungselementes mit einem Bausatzteil dienen.

Erfindungsgemäß weist der Grundkörper eine flache Vorderseite und eine mit der Vorderseite deckungsgleiche, flache Rückseite auf. Des Weiteren weist der Grundkörper zwei gegenüberliegende Schenkel auf, wobei die Schenkel auf ihren einander zugewandten Innenseiten wenigstens einen Gewindeabschnitt tragen.

Aufgrund der Ausgestaltung einer flachen Vorderseite sowie einer flachen Rückseite kann der Grundkörper eine im Wesentlichen quaderförmige Form aufweisen. Insbesondere das erste freie Ende des Grundkörpers kann abgerundet und/oder abgeschrägt ausgebildet sein. Die Stirnflächen des Grundkörpers, die sich umfangsseitig zwischen der flachen Vorderseite und der flachen Rückseite erstrecken, können demnach im Wesentlichen ebenfalls flach ausgebildet sein, wobei die Stirnfläche(n) insbesondere im Bereich des ersten freien Endes unterbrochen und/oder abgeschrägt und/oder abgerundet sein kann bzw. können.

Die Schenkel tragen auf ihren einander zugewandten Innenseiten wenigstens einen Gewindeabschnitt. Mit anderen Worten wird der wenigstens eine Gewindeabschnitt durch die Innenseiten der Schenkel gebildet bzw. begrenzt.

In einer Ausführungsform der Erfindung ist es möglich, dass die Schenkel am freien Ende des Grundkörpers unter Bildung eines bogenförmigen Abschnitts ineinander übergehen. Die Schenkel können mit dem zweiten Ende des Grundkörpers eine Ringform oder eine halbrunde Form bilden. Der Grundkörper steht vorzugsweise senkrecht vom Anschlag ab.

Die Gewindeachse des wenigstens einen Gewindeabschnitts kann, vorzugsweise im Zusammenhang mit der Ausführungsform, der zufolge die Schenkel am freien Ende des Grundkörpers unter Bildung eines bogenförmigen Abschnitts ineinander übergehen, parallel zur Breitenerstreckung des Anschlags verlaufen. Als Breitenerstreckung des Anschlags ist diejenige Erstreckung des Anschlags zu verstehen, die hinsichtlich der Grundfläche des Anschlags die geringere Erstreckung aufweist. Die Breitenerstreckung des Anschlags verläuft demnach parallel zur Breite des Grundkörpers, wobei die Breite des Grundkörpers aufgrund des Abstandes von der Vorderseite zur Rückseite des Grundkörpers definiert ist.

Der Gewindeabschnitt kann zur Hälfte ein Rechtsgewinde und zur anderen Hälfte ein Linksgewinde aufweisen. Mit anderen Worten besteht der Gewindeabschnitt aus zwei Teilabschnitten, wobei ein Teilabschnitt ein Rechtsgewinde und der andere Teilabschnitt ein Linksgewinde aufweist. Vorzugsweise erstreckt sich die erste Hälfte bzw. der erste Teilabschnitt von der Vorderseite oder Rückseite bis zur Hälfte der Breite des Grundkörpers. Die zweite Hälfte bzw. der zweite Teilabschnitt des Gewindeabschnitts erstreckt sich komplementär dazu entweder von der Vorderseite oder der Rückseite bis zur Hälfte der Breite des Grundkörpers.

Die unterschiedlichen Gewindeabschnitte sind lediglich durch eine gemeinsame Betrachtungsebene ersichtlich. Sofern der Grundkörper von der Vorderseite auf die Rückseite oder umgekehrt gedreht wird, liegt immer ein Rechtsgewinde vor. Die Ausbildung unterschiedlicher Gewindeteilabschnitte dient folglich dazu, dass in das Verbindungselement bei variabler Verbauung des Verbindungselementes immer ein Schraubelement mit gewohnter Rechtsdrehung in den Gewindeabschnitt des Verbindungselementes eingedreht werden kann.

Es ist möglich, dass die Gewindegänge des Gewindeabschnitts unterbrochen, d.h. nicht durchgehend ausgebildet sind. Insbesondere ist es denkbar, dass in einem Gewindeteilabschnitt ein vollständiger Gewindegang vorliegt. Vorzugsweise ist der Gewindegang lediglich in einer Erstreckung von 180 Grad bis 359 Grad, insbesondere von 200 Grad bis 340 Grad, ausgebildet.

Weiterhin kann der Gewindeabschnitt des Verbindungselementes lediglich ein Rechtsgewinde aufweisen. Hierbei ist es notwendig, dass das Verbindungselement in einer korrekten Position mit einem Bausatzteil verbunden bzw. in einer korrekten Position in das Bausatzteil eingeführt ist.

In einer weiteren Ausführungsform der Erfindung können die Schenkel des Grundkörpers zahnstangenartig ausgebildet sein. Das erste freie Ende des Grundkörpers kann demnach durch freie Enden der Schenkel gebildet werden. Auf den einander zugewandten Innenseiten der Schenkel bzw. auf den Innenseiten der Zahnstangen ist wenigstens ein Gewindeabschnitt ausgebildet. Mit anderen Worten wird der Gewindeabschnitt durch die einander zugewandten Innenseiten der Zahnstangen begrenzt bzw. gebildet. Der Gewindeabschnitt weist gemäß dieser Ausführungsform keine durchgehenden Gewindegänge auf. Vielmehr sind lediglich an den Innenseiten der Schenkel Gewindeflanken ausgebildet, wobei die übereinander angeordneten Gewindeflanken des ersten Schenkels und die übereinander angeordneten Gewindeflanken des zweiten Schenkels den Gewindeabschnitt bilden.

Bei der vorliegenden Ausführungsform mit zahnstangenartig ausgebildeten Schenkeln ist es denkbar, dass die Gewindeachse des wenigstens einen Gewindeabschnitts senkrecht zur Breitenerstreckung und senkrecht zur Längserstreckung des Anschlags verläuft. Bezüglich der Breitenerstreckung gelten die bereits angeführten Erklärungen. Als Längserstreckung des Anschlags wird die Erstreckung der Grundfläche des Anschlags definiert, die im Vergleich zur Breitenerstreckung eine größere Erstreckung aufweist. Die Längserstreckung des Anschlags verläuft parallel zur Länge des Grundkörpers. Die Länge des Grundkörpers ist die Senkrechte zur Breite des Grundkörpers. Sofern die Gewindeachse des wenigstens einen Gewindeabschnitts senkrecht zur Breitenerstreckung sowie senkrecht zur Längserstreckung des Anschlags verläuft, endet der Gewindeabschnitt beispielsweise an dem Anschlag des Verbindungselementes. Eine Anschlagsfläche, insbesondere die den Schenkeln zugewandte Anschlagsfläche, bildet beispielsweise den Boden des Gewindeabschnitts. An diesem Boden kann beispielsweise die Spitze eines Schraubelements anliegen, sofern das Verbindungselement im verbundenen Zustand vorliegt.

Wenigstens ein Schenkel kann auf der vom Gewindeabschnitt wegweisenden Seitenfläche bzw. auf der von dem Gewindeabschnitt weggewandten Außenseite eine Einbuchtung und/oder einen Einschnitt aufweisen. Die Einbuchtung und/oder der Einschnitt können als Verrastungshilfe dienen. Es ist denkbar, dass die Einbuchtung und/oder der Einschnitt an einer Kante eines mit einem weiteren Bausatzteil zu verbindenden Bausatzteils anliegen. Die Einbuchtung kann auch als Ausnehmung, die auf der Außenseite des Schenkels ausgebildet ist, bezeichnet werden.

Vorzugsweise ist auf beiden Außenseiten der beiden Schenkel jeweils eine Einbuchtung und/oder ein Einschnitt ausgebildet. Mit Hilfe dieser Einbuchtung und/oder dieses Einschnitts kann eine Vor-Arretierung des Verbindungselementes in wenigstens einem Bausatzteil durchgeführt werden. Anschließend kann in das Verbindungselement ein Schraubelement bzw. eine Schraube eingeführt werden.

In einer weiteren Ausführungsform der Erfindung ist auf der Vorderseite und/oder auf der Rückseite des Grundkörpers ein Rastelement und/oder ein Orientierungselement ausgebildet. Dieses Rastelement kann beispielsweise in eine Ausnehmung eines Bausatzteils einrasten. Das Rastelement kann beispielsweise als Rastnase und/oder als tropfenförmiges und/oder halbzylinderförmiges Rastelement ausgebildet sein. Die Ausnehmung des Bausatzteils ist entsprechend komplementär bzw. korrespondierend zu dieser Form ausgebildet. Auch das Orientierungselement kann beispielsweise als Rastnase und/oder als tropfenförmiges und/oder halbzylinderförmiges Element ausgebildet sein, wobei dann die Ausnehmung eines Bausatzteils entsprechend komplementär zu dieser Form ausgebildet ist. Das Orientierungselement dient dazu, das Verbindungselement in der richtigen Orientierung in ein Bausatzteil einzuführen. Dies ist beispielsweise dann notwendig, wenn das Verbindungselement lediglich einen Gewindeabschnitt mit vorgegebener Gewindeorientierung aufweist. Aufgrund des Orientierungselementes, kann das Verbindungselement lediglich in einer vorgegebenen Position in das Bausatzteil eingeführt bzw. mit dem Bausatzteil verbunden werden. Ein Verrasten des Orientierungselementes mit dem Bausatzteil ist nicht zwingend notwendig.

Ein Orientierungselement kann beispielsweise dann ausgebildet sein, wenn der Gewindeabschnitt lediglich ein Rechtsgewinde aufweist und die Schenkel des Verbindungselementes am freien Ende des Grundkörpers unter Bildung eines bogenförmigen Abschnitts ineinander übergehen.

In einer Ausführungsform der Erfindung ist es möglich, dass das Orientierungselement und das Rastelement als ein einziges Bauteil bzw. als ein Element ausgebildet sind. Mit anderen Worten kann das Orientierungselement zugleich als Rastelement ausgebildet sein.

Im Sinne der vorliegenden Erfindung ist somit ein Bausatz vorstellbar, der wenigstens ein erfindungsgemäßes Verbindungselement sowie wenigstens eine Schraube und wenigstens zwei lösbar zu verbindende Bausatzteile umfasst. Vorzugsweise umfasst der Bausatz eine übereinstimmende Anzahl von Verbindungselementen und Schrauben.

Die wenigstens eine Schraube weist am einem Schraubenkopf zugewandten Ende eines Schraubenkörpers einen gewindefreien Abschnitt auf. Der gewindefreie Abschnitt ist somit an dem Ende des Schraubenkörpers vorgesehen, das von der Spitze des Schraubenkörpers abgewandt ist.

Insbesondere ist zu berücksichtigen, dass die wenigstens eine Schraube des Bausatzes bevorzugterweise im Sinne des vorstehend beschriebenen Schraubelementes des erfindungsgemäßen Verbindungssystems ausgebildet sein kann. Jedoch soll die Schraube des Bausatzes nicht ausschließlich auf die konkrete Ausführung des Schraubelementes beschränkt sein. Dennoch ist unter dem Begriff der Schraube auch das Schraubelement des erfindungsgemäßen Verbindungssystems zu verstehen.

Die Schraube kann einen Übergangsbereich aufweisen, der zwischen dem gewindefreien Abschnitt und einem Gewinde ausgebildet ist. In diesem Übergangsbereich kann wenigstens eine Einkerbung vorgesehen sein. Ferner kann der Übergangsbereich beispielsweise absatzartig ausgestaltet sein. Ausgehend vom gewindefreien Abschnitt kann somit in Richtung des Gewindes ein Absatz mit einer radial umlaufenden Stirnfläche vorliegen. Die wenigstens eine Einkerbung ist vorzugsweise in dieser Stirnfläche ausgebildet. Es ist möglich, dass bis zu vier Einkerbungen in der radial umlaufenden Stirnfläche angeordnet sind. Ferner ist es möglich, dass die Einkerbungen eine zusätzliche Verrastung des Schraubelementes mit dem zu verbindenden Bausatzteil im zusammengesetzten Zustand erzeugen.

Der Bausatz umfasst vorzugsweise wenigstens zwei Verbindungselemente, wobei wenigstens ein Verbindungselement Schenkel aufweist, die am freien Ende des Grundkörpers unter Bildung eines bogenförmigen Abschnitts ineinander übergehen. Wenigstens ein weiteres Verbindungselement weist hingegen Schenkel auf, die zahnstangenartig ausgebildet sind.

Der Bausatz kann demnach wenigstens zwei Verbindungselemente unterschiedlicher Ausführungsart umfassen. So kann für die jeweils zu erzeugende Verbindung von zwei Bausatzteilen das passende Verbindungselement bzw. die idealste Verbindungsmöglichkeit gewählt werden. Die Wahl zwischen den unterschiedlichen Verbindungselementen kann auch in Abhängigkeit von der Verbauungssituation, d.h. in Abhängigkeit vom Platzangebot erfolgen.

Wenigstens ein Bausatzteil kann eine Absenkung aufweisen, die derart ausgebildet ist, dass diese Absenkung den Anschlag eines Verbindungselementes aufnimmt. In die Absenkung wird zunächst das freie Ende des Verbindungselementes eingeführt und durchgeführt, so dass der Anschlag, insbesondere die zum Grundkörper zugewandte Anschlagsfläche, auf einer Senkungsfläche aufliegt. Die Senkungsfläche ist vorzugsweise als eine Umrandung der Öffnung des Modellsatzbauteils ausgebildet. Ferner ist der Öffnungsquerschnitt bevorzugterweise an den Grundkörperquerschnitt des Verbindungselementes angepasst. Der Öffnungsquerschnitt ist vorzugsweise geringfügig größer ausgebildet als der Querschnitt des Grundkörpers.

Des Weiteren ist es möglich, dass wenigstens ein Bausatzteil eine gehäuseartige Aufnahme aufweist, die derart ausgebildet ist, dass diese den Grundkörper eines Verbindungselementes aufnimmt. Der Anschlag des Verbindungselementes liegt vorzugsweise auf der gehäuseartigen Aufnahme auf. Die gehäuseartige Aufnahme weist beispielsweise wenigstens zwei Öffnungen auf. Die Öffnungsachsen der beiden Öffnungen der gehäuseartigen Aufnahme liegen dabei senkrecht zueinander.

Durch eine Öffnung der gehäuseartigen Aufnahme wird der Grundkörper des Verbindungselementes eingeführt. Die wenigstens eine weitere Öffnung dient zur Einführung einer Schraube und/oder eines Bolzens. Der Anschlag, insbesondere die den Grundkörper zugewandte Anschlagsfläche, liegt auf wenigstens einer Umrandung bzw. auf einem Randabschnitt einer Öffnung der gehäuseartigen Aufnahme auf. Bei dieser Öffnung handelt es sich um die Öffnung, in welche der Grundkörper des Verbindungselementes eingeführt wird. In einer bevorzugten Ausführungsform der Erfindung weist die gehäuseartige Aufnahme drei Öffnungen auf, wobei wenigstens zwei Öffnungen der gehäuseartigen Aufnahme gegenüberliegend bzw. einander zugewandt ausgebildet sind. Durch diese beiden Öffnungen kann beispielsweise die Schraube und/oder ein Bolzen eingeführt und durchgeführt werden.

Des Weiteren kann ein solcher Bausatz ein erfindungsgemäßes Verbindungssystem aufweisen. Die wenigstens eine Schraube des Bausatzes ist bevorzugterweise gemäß dem Schraubelement des Verbindungssystems ausgestaltet. Der Bausatz weist folglich wenigstens ein Schraubelement sowie wenigstens ein Schlüsselelement auf. Insbesondere ist vorgesehen, dass die Schraube des Bausatzes derart ausgestaltet ist, dass sie die Eigenschaften des Schraubelementes aufweist und die Funktionen der Schraube des Bausatzes erfüllt. Ebenso gilt dies für die Bestandteile des Schraubelementes bzw. der Schraube, wie z.B. den Kraftübernahmekopf und den Schraubenkopf. Bevorzugterweise ist das Schraubelement des Verbindungssystems als die Schraube im Sinne des Bausatzes zu verstehen. Gleichzeitig soll dabei nicht ausgeschlossen sein, dass die Schraube im Sinne des Bausatzes anders ausgestaltet ist, wobei die Schraube weiterhin die zugeordneten Eigenschaften für den Bausatz aufweist.

Gemäß einem weiteren nebengeordneten Patentanspruch ist die Verwendung des erfindungsgemäßen Verbindungssystems zum lösbaren Zusammensetzen eines technischen oder funktionalen oder modularen Bausatzes vorgesehen. Insbesondere ist vorgesehen, das Verbindungssystem zum Zusammensetzen eines Bausatzes zu verwenden. Vorzugsweise sind somit unter anderem auch Modellbausätze mit einem erfindungsgemäßen Verbindungssystems verwendbar, um die einzelnen Bauteile des Modellbausatzes lösbar miteinander zu verbinden. Vorteilhafterweise kann der Modellbausatz auf einfache Weise durch ungeübte Personen oder Kinder geringen Alters unter Verwendung des Verbindungssystems zusammengesetzt werden.

Zusammenfassend kann festgestellt werden, dass mit Hilfe mehrerer Verbindungselemente sowie mehrerer Schrauben bzw. Schraubelemente unterschiedliche Bausatzteile eines Bausatzes zusammengesetzt bzw. aneinander befestigt werden können. Vorzugsweise umfasst der Bausatz zwei unterschiedliche Ausführungsformen von Verbindungselementen. Infolgedessen können beispielsweise auch Räder und Türen von Modellfahrzeugen beweglich fixiert werden. Ferner ist es anhand des Verbindungssystems unmöglich, Bausatzteile durch Aufbringen zu großer Kräfte bzw. Drehmomente zu beschädigen.

Bei dem Verbindungselement handelt es sich um ein einfach handhabbares Verbindungwerkzeug, das ohne Probleme in eine Absenkung und/oder in eine gehäuseartige Aufnahme eines Bausatzteils eingeführt werden kann. Dies ist auch Kindern im Alter von 5 bis 8 Jahren möglich. Aufgrund von einheitlich ausgebildeten Schrauben bzw. Schraubelementen ist es dem Kind möglich, diese einfach, ohne eine Auswahl bezüglich der Schrauben treffen zu müssen, in die Gewindeabschnitte der Verbindungselemente einzuführen.

Es ist möglich, dass der Anschlag eines Verbindungselementes mit zwei Schenkeln, die am freien Ende des Grundkörpers unter Bildung eines bogenförmigen Abschnitts ineinander übergehen, bezüglich der Dimensionierung unterschiedlich ausgebildet ist, nämlich zu einem Anschlag eines Verbindungselementes mit zahnstangenartig ausgebildeten Schenkeln. Aufgrund der unterschiedlich ausgebildeten Anschläge kann verhindert werden, dass ein Verbindungselement einer ersten Bauform in die nicht dafür vorgesehene Absenkung und/oder gehäuseartige Aufnahme eines einzuführenden Verbindungselementes gemäß zweiter Bauart eingeführt wird.

Die Erfindung wird im Folgenden anhand von Ausführungsbeispielen unter Bezugnahme auf die beigefügten, schematischen Zeichnungen, näher erläutert.

Darin zeigen:
- Fig. 1a, 1b: verschiedene Ansichten eines Schlüsselelementes gemäß einer möglichen Ausführungsform des Verbindungssystems;
- Fig. 2a, 2b: verschiedene Ansichten eines Schraubelementes gemäß einer möglichen Ausführungsform des Verbindungssystems;
- Fig. 3a - c: verschiedene Ansichten eines erfindungsgemäßes Verbindungselementes gemäß einer ersten Ausführungsform;
- Fig. 4a - c: verschiedene Ansichten eines erfindungsgemäßes Verbindungselementes gemäß einer zweiten Ausführungsform;
- Fig. 5a, 5b: zwei zu verbindende Bausatzteile gemäß einer Explosionsdarstellung und im zusammengebauten Zustand mit einem Verbindungselement gemäß der ersten Ausführungsform; und
- Fig. 6a, 6b: zwei zu verbindende Bausatzteile gemäß einer Explosionsdarstellung und im zusammengebauten Zustand mit einem Verbindungselement gemäß der zweiten Ausführungsform.

Im Folgenden werden für gleiche und gleichwirkende Teile vornehmlich gleiche Bezugszeichen verwendet. Lediglich hinsichtlich des Schraubelementes 8 und der Schraube 40 werden die jeweiligen, figurspezifischen Bezugszeichen angegeben.

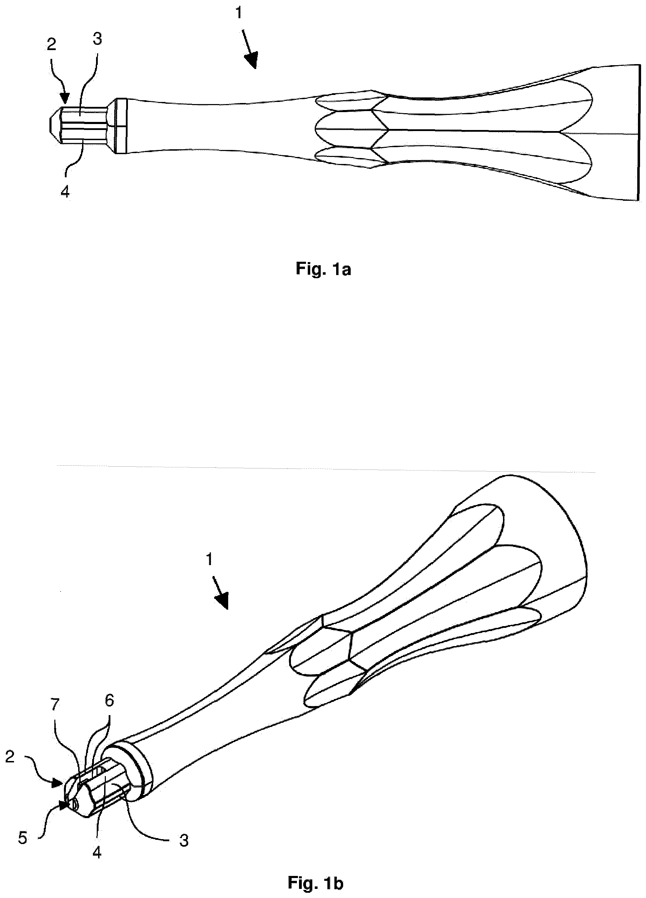

Fig. 1a und 1b zeigen ein Ausführungsbeispiel eines Schlüsselelementes 1 des erfindungsgemäßen Verbindungssystems in der Seitenansicht sowie in einer isometrischen Darstellung. Aus Fig. 1a wird ersichtlich, dass das Schlüsselelement 1 bevorzugterweise in der Grundform eines Schraubenziehers ausgestaltet ist. Demnach ist das Schlüsselelement 1 mit einem geeigneten Handgriff versehen, der entlang seines gesamten Umfangs greifbar ist. Somit kann eine Rotationskraft von einem Anwender des Verbindungssystems auf einfache Weise in das Verbindungssystem eingeleitet werden.

Das Schlüsselelement 1 weist einen Kraftübertragungskopf 2 auf. Dieser Kraftübertragungskopf 2 ist in absatzartiger Form von dem längsförmigen Handgriff abgegrenzt. Der Kraftübertragungskopf weist mehrere Seitenflächen 3 auf, die in dem Ausführungsbeispiel gemäß Fig. 1a an der Außenseite des Kraftübertragungskopfes 2 vorgesehen sind. Im Sinne der vorliegenden Erfindung ist es möglich, dass der Kraftübertragungskopf derart ausgestaltet ist, dass die Seitenflächen in einem Innenumfang vorliegen, vergleichbar mit der Ausbildung eines üblichen Schlüsselaufsatzes für eine mechanische Ratsche.

Zwischen aneinandergrenzenden Seitenflächen 3 sind Kanten 4 in abgerundeter Form vorgesehen (siehe auch Fig. 1b). Der Kraftübertragungskopf 2 weist ferner eine Spitze auf, die konisch zuläuft. Vorteilhafterweise ist das Schlüsselelement 1 somit leichter in eine korrespondierende Aufnahme einzuführen, da sich der Kraftübertragungskopf 2 beim Einführen in die zugehörige Aufnahme bis zu einem bestimmten Grad selbst zentriert.

In Fig. 1b ist der Kraftübertragungskopf 2 mit einem Schlitz 5 gezeigt. Der Schlitz 5 weist eine bestimmte Breite sowie Tiefe auf und spaltet den Kraftübertragungskopf 2 nur teilweise entlang seiner Längsrichtung. Anhand des Schlitzes 5 werden Flanken 6 ausgebildet, die sich gegenüberstehen. Gemäß dem gezeigten Ausführungsbeispiel kann eine reversible Verformung des Kraftübertragungskopfes 2 erreicht werden, indem die sich gegenüberliegenden Flanken 6 in der dem Schlitz 5 zugewandten Richtung verformt werden und der Schlitz 5 somit verengt wird.

Ferner ist in Fig. 1b ansatzweise angedeutet, dass in dem Schlitz 5 an wenigstens einer der Flanken 6 ein Abstützelement 7 angeordnet ist. Auf diese Weise kann eine reversible Verformung der Flanken 6 eingeschränkt werden, wobei eine breitere Ausgestaltung des Schlitzes 5 die reversible Verformung der Flanken 6 des Kraftübertragungskopfes mit einer geringeren Kraft ermöglicht. Ferner weist der Kraftübertragungskopf ein erstes Material auf, wobei auch das restliche Schlüsselelement in Teilen oder im Gesamten das erste Material aufweisen kann.

Somit ist eine definierbare Maximalkraft anhand des gezeigten Ausführungsbeispiel des Schlüsselelementes nicht nur anhand der Wahl des ersten Materials des Kraftübertragungskopfes möglich, sondern auch anhand des konkreten Dimensionierung des wenigstens einen Schlitzes 5 in Relation zu den Dimensionen des Kraftübertragungskopfes 2 sowie der möglichen Anordnung und Dimensionierung von Abstützelementen 7. Durch eine derartige Dimensionierung bzw. die spezifische Wahl des ersten Materials und/oder eines zweiten Materials für ein zugehöriges Schraubelement ist eine Maximalkraft für das erfindungsgemäße Verbindungssystem im Vorhinein einstellbar bzw. definierbar.

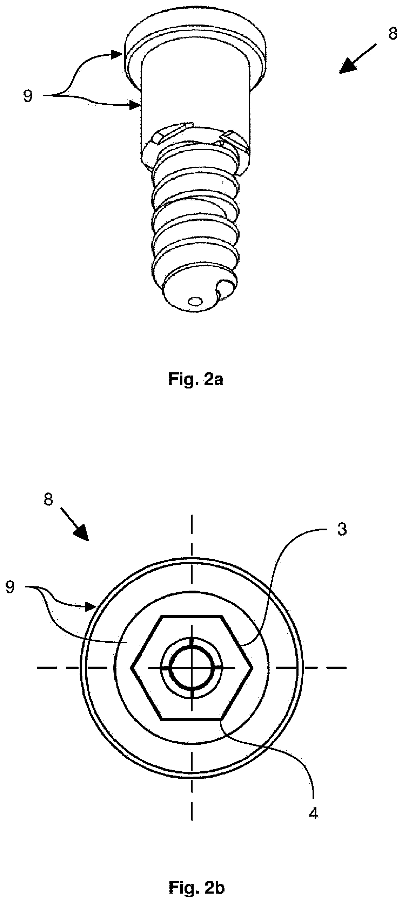

In den Fig. 2a und 2b ist ein Ausführungsbeispiel eines Schraubelementes 8 des erfindungsgemäßen Verbindungssystems in einer isometrischen Darstellung sowie in einer Draufsicht auf die Oberseite dargestellt.

Gemäß Fig. 2a weist das Schraubelement 2 einen Kraftübernahmekopf 9 auf, sowie ein Gewinde, um Bauteile lösbar miteinander verbinden zu können. Die in Fig. 1a und 2a gezeigten Komponenten des erfindungsgemäßen Verbindungssystems sind folglich derart ausgestaltet, dass eine handelsübliche Schraubverbindung mittels des Verbindungssystems herstellbar ist.

In Fig. 2b ist der Kraftübernahmekopf 9 in einer Draufsicht auf die Oberseite gezeigt. Gemäß diesem Ausführungsbeispiel sind Seitenflächen 3 an einem Innenumfang des Kraftübernahmekopfes 9 ausgestaltet. Ebenso wie im Falle des Kraftübertragungskopfes 2 des Schlüsselelementes 1, ist es in komplementärer Form vorstellbar, dass die Seitenflächen 3 an dem Außenumfang des Kraftübernahmekopfes 9 vorgesehen sind, um korrespondierend zu dem Schlüsselelement 1 bzw. zu dem Kraftübertragungskopf 2 ausgestaltet zu sein. Ferner ist der Kraftübertragungskopf aus einem zweiten Material hergestellt, wobei wahlweise auch das Schraubelement zu weiteren Teilen oder im Gesamten das zweite Material aufweisen kann.

Zwischen aneinander angrenzenden Seitenflächen 3 sind gemäß Fig. 2b Kanten 4 an dem Innenumfang des Kraftübernahmekopfes 9 erkennbar. Die Kanten 4 sind gemäß dem gezeigten Ausführungsbeispiels nicht abgerundet oder abgeflacht. Im Sinne des allgemeinen, technischen Verständnisses ist dies nicht zwingend notwendig, um ein gewünschtes Abgleiten des Kraftübertragungskopfes 2 gegenüber dem Kraftübernahmekopfes 9 erzielen zu können, wenn eine Rotationskraft eingeleitet wird, die höher ist als eine definierbare Maximalkraft. Dem zugrundeliegenden allgemeinen Verständnis nach ist es in der gezeigten Ausgestaltungsform des Kraftübernahmekopfes 9 die logische Folge, bedarfsweise die korrespondierenden, außenliegenden Kanten 4 des Kraftübertragungskopfes 2 entsprechend abzurunden bzw. abzuflachen.

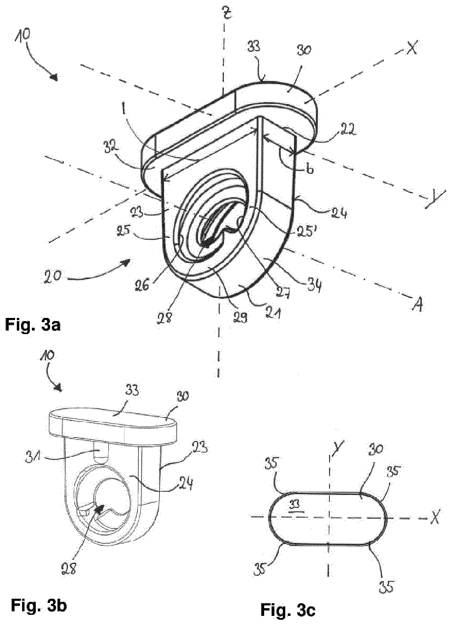

In Fig. 3a bis 3c ist ein Verbindungselement 10 für einen Bausatz gezeigt. Das Verbindungselement 10 weist einen Grundkörper 20 auf, der ein erstes freies Ende 21 und ein zweites Ende 22 aufweist. Das zweite Ende 22 ist mit einem Anschlag 30 verbunden. Dieses Verbinden des zweiten Endes 22 des Grundkörpers 20 mit dem Anschlag 30 kann auch das Vorliegen einer einteiligen bzw. monolithischen Ausführungsform der beiden Elemente betreffen.

Der Anschlag 30 überragt den Grundkörper 20 in seiner Breite b sowie in seiner Länge l. Mit anderen Worten weist der Anschlag 30 eine Anschlagsfläche 32 auf, die den Grundkörper 20 hinsichtlich seiner Breite b und seiner Länge l seitlich überragt. Die Anschlagsfläche 32 ist dem Grundkörper 20 zugewandt ausgebildet. Vom Grundkörper 20 abgewandt ist die Oberseite 33 des Anschlags 30 ausgebildet. Im dargestellten Beispiel überragt die Anschlagsfläche 32 den Grundkörper 20 vollumfänglich. Das bedeutet, dass der Querschnitt des Anschlags 30 breiter und länger als der Querschnitt des Grundkörpers 20 ist.

Der Grundkörper 20 weist eine flache Vorderseite 23 und eine mit der Vorderseite 23 deckungsgleiche, flache Rückseite 24 auf. Die Vorderseite 23 und die Rückseite 24 sind parallel zueinander ausgerichtet. Die Stirnfläche 34 des Grundkörpers 20 ist zwischen der Vorderseite 23 und der Rückseite 24 ausgebildet. Der Abstand zwischen der Vorderseite 23 und der Rückseite 24 bzw. die Breite der Stirnfläche 34 definiert die Breite b des Grundkörpers 20.

Der Grundkörper 20 umfasst des Weiteren zwei gegenüberliegend ausgebildete Schenkel 25, 25', wobei die Schenkel 25, 25' auf ihren einander zugewandten Innenseiten 26 und 27 wenigstens einen Gewindeabschnitt 28 tragen. Die Innenseiten 26 und 27 der Schenkel 25 und 25' bilden bzw. begrenzen den Gewindeabschnitt 28. Die Schenkel 25, 25' gehen am freien Ende 21 des Grundkörpers 20 unter Bildung eines bogenförmigen Abschnittes 29 ineinander über. Die Schenkel 25, 25' bilden folglich am freien Ende 21 des Grundkörpers 20 einen halbringförmigen Abschnitt.

Der Anschlag 30 weist eine rechteckförmige Grundform mit abgerundeten Ecken 35 auf. Aufgrund der abgerundeten Ecken 35 besitzt der Anschlag 30 die Form eines Langlochs. Die Oberseite 33 und die Anschlagsfläche 32 des Anschlags 30 sind deckungsgleich zueinander ausgebildet. Die Form der Oberseite 33 des Anschlags 30 ist in Fig. 3c zu erkennen. Ebenfalls dargestellt ist die Breitenerstreckung, die als Y-Achse dargestellt ist. Die Längserstreckung des Anschlags 30 ist als X-Achse eingezeichnet. Die Breitenerstreckung Y des Anschlags 30 betrifft die Breite des Anschlags 30, die geringer als die Länge des Anschlags 30 ist.

Die Länge wird mit Hilfe der X-Achse definiert. Die Gewindeachse A des wenigstens einen Gewindeabschnitts 28 verläuft gemäß Darstellung in Fig. 3a parallel zur Breitenerstreckung Y des Anschlags 30. Entlang dieser Gewindeachse A kann somit eine Schraube in den Gewindeabschnitt 28 eingeführt werden. Die Längserstreckung der Schraube verläuft folglich parallel zur Breitenerstreckung Y des Anschlags 30.

Der Gewindeabschnitt 28 weist zur Hälfte ein Rechtsgewinde auf, wobei die Hälfte der halben Breite b des Grundkörpers 20 entspricht. Das heißt, wenn im dargestellten Beispiel gemäß Fig. 3a auf den Gewindeabschnitt 28 geblickt wird, weist die erste vordere Hälfte des Gewindeabschnitts 28 kein Gewinde und die hintere Hälfte des Gewindeabschnitts 28 ein Rechtsgewinde auf. Bei einer Drehung des Verbindungselementes 10, so dass die Rückseite 24 sichtbar wird (siehe Fig. 3b), weist die nunmehr vordere Hälfte des Gewindeabschnitts 28 ein Rechtsgewinde und die dann ausgebildete hintere Hälfte des Gewindeabschnitts 28 kein Gewinde auf. Wie aus der Darstellung hervorgeht, ist der Gewindegang des Rechtsgewindes nicht vollständig, d.h. nicht in einer 360 Grad-Erstreckung, ausgebildet; vielmehr ist der Gewindegang unterbrochen.

Auf der Rückseite 24 des Grundkörpers 20 ist in Nähe des Anschlags 30, insbesondere an die Anschlagsfläche 32 angrenzend, ein Rastelement 31 ausgebildet (siehe Fig. 1b), welches halbzylinderförmig ausgestaltet ist. Es dient dazu, in eine komplementär zu der Form des Rastelementes 31 ausgebildete Ausnehmung eines Bausatzteils einrasten zu können. Das Rastelement 31 dient zur Arretierung des Verbindungselementes 10 in einem Bausatzteil. Das Rastelement 31 kann sowohl auf der Rückseite 24 als auch auf der Vorderseite 23 des Grundkörpers 20 ausgebildet sein. In einer weiteren Ausführungsform ist es denkbar, dass sowohl auf der Vorderseite 23 als auch auf der Rückseite 24 jeweils ein Rastelement vorgesehen ist.

Das dargestellte Rastelement 31 dient außerdem als Orientierungselement. Das Orientierungselement dient dazu, das Verbindungselement 10 in der richtigen Orientierung in ein Bausatzteil einzuführen. Das Verbindungselement 10 ist derart in das Bausatzteil einzuführen, dass die Rückseite 24, bzw. der Teil des Gewindeabschnitts 28, der ein Rechtsgewinde aufweist, in Richtung einer einzuführenden Schraube orientiert ist.

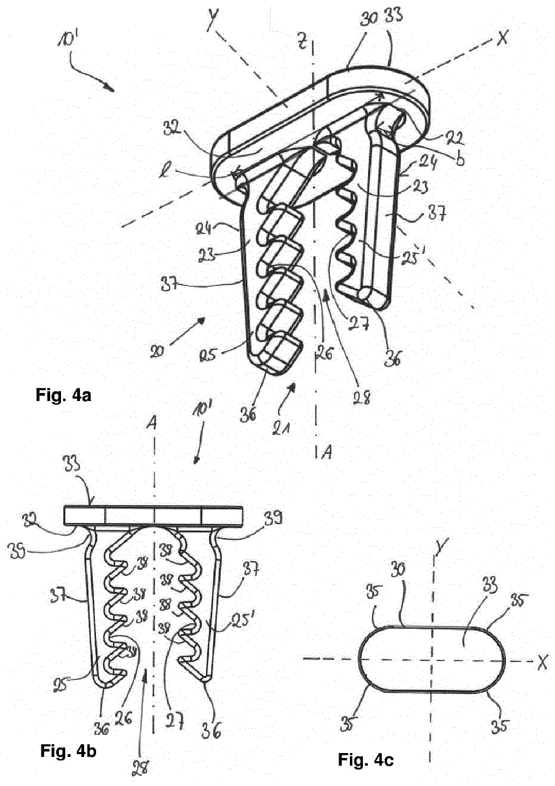

In den Fig. 4a bis 4c ist eine weitere mögliche Ausführungsform eines erfindungsgemäßen Verbindungselementes 10' dargestellt. Hinsichtlich des Anschlags 30 sowie der Längserstreckung X und der Breitenerstreckung Y gelten die gleichen Erläuterungen, wie diese bereits in Zusammenhang mit der Ausführungsform gemäß den Fig. 3a bis 3c erfolgt sind.

Auch das Verbindungselement 10' weist einen Grundkörper 20 und einen Anschlag 30 auf. Der Grundkörper 20 besitzt ein erstes freies Ende 21 und ein zweites Ende 22, wobei der Anschlag 30, insbesondere die Anschlagsfläche 32, mit dem zweiten Ende 22 des Grundkörpers 20 verbunden ist. Auch in diesem Zusammenhang ist es denkbar, dass der Anschlag 30 und der Grundkörper 20 einteilig, d.h. monolithisch ausgebildet sind. Der Anschlag 30 überragt den Grundkörper 20 in seiner Breite b und in seiner Länge l. Alternativ ist es ferner denkbar, dass der Anschlag 30 den Grundkörper 20 lediglich in seiner Breite b oder in seiner Länge l überragt.

Der Grundkörper 20 weist eine flache Vorderseite 23 und eine mit der flachen Vorderseite 23 deckungsgleiche flache Rückseite 24 auf. Der Grundkörper 20 umfasst des Weiteren zwei Schenkel 25, 25', die auf ihren einander zugewandten Innenseiten 26, 27 wenigstens einen Gewindeabschnitt 28 tragen. Die Schenkel 25, 25' sind zahnstangenartig ausgebildet. Das heißt, sowohl der linke Schenkel 25 als auch der rechte Schenkel 25' weist jeweils übereinander ausgebildete Gewindeflanken 38 auf. Diese Gewindeflanken 38 sind seitlich unterbrochen, d.h. es werden keine durchgängigen Gewindegänge gebildet. Der Gewindeabschnitt 28 wird durch einander zugewandte, übereinander angeordnete Gewindeflanken 38 gebildet.

Das erste freie Ende 21 des Grundkörpers 20 wird durch die freien Enden 36 der Schenkel 25, 25' gebildet. Die Außenseiten 37 verlaufen nicht parallel zueinander. Die voneinander abgewandten Außenseiten 37 der Schenkel 25 und 25' verlaufen in Richtung der freien Enden 36 der Schenkel 25 und 25' schräg (siehe Fig. 4b). Aufgrund dieser leicht angeschrägten Ausführungsform der Außenseiten 37 kann der Grundkörper 20 leichter in eine Öffnung eines Bausatzteils eingeführt werden. Die Gewindeachse A des wenigstens einen Gewindeabschnitts 28 verläuft gemäß Darstellung der Fig. 4a sowohl senkrecht zur Breitenerstreckung Y als auch senkrecht zur Längserstreckung X des Anschlags 30. Der Gewindeabschnitt 28 endet folglich an der Anschlagsfläche 32. Mit anderen Worten fällt die Gewindeachse A mit der Höhenerstreckung Z des Anschlags 30 bzw. des Verbindungselementes 10' zusammen.

In Fig. 4b ist dargestellt, dass die Außenseite 37 des Schenkels 25 und die Außenseite 37 des Schenkels 25' jeweils eine Einbuchtung 39 aufweist. Die Einbuchtung 39 ist im Bereich des zweiten Endes 22 des Grundkörpers 20 ausgebildet. Die Einbuchtung 39 kann auch als Einkerbung bzw. Ausnehmung bezeichnet werden. Die Einbuchtung 39 dient dazu, mit einem Bausatzteil eine verrastende Verbindung eingehen zu können. Hierzu weist das Bausatzteil beispielsweise eine entsprechend komplementäre Formgebung in einem Öffnungsbereich auf. Es ist möglich, dass die Außenseite 37 zumindest eines Schenkels 25, 25' ein Rastelement aufweist, das ähnlich wie das Rastelement 31 gemäß Ausführungsform der Fig. 3a bis 3c ausgebildet ist.

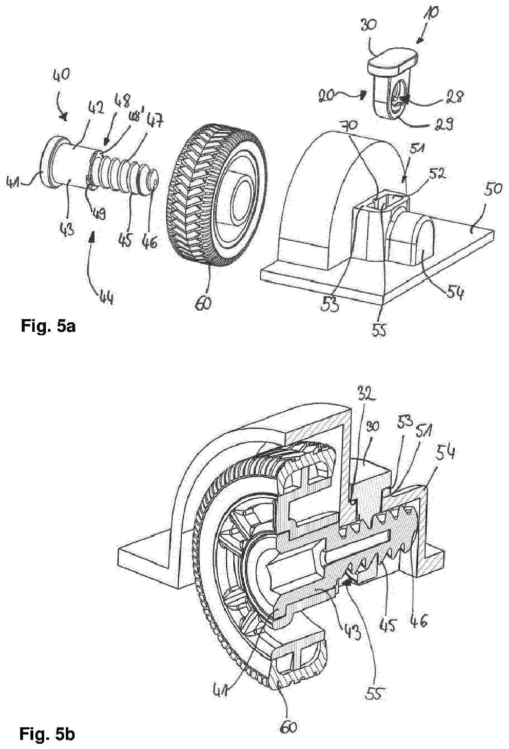

Die Fig. 5a zeigt ausschnittsweise einen Bausatz, der ein Verbindungselement 10, eine Schraube 40 und zwei lösbar zu verbindende Bausatzteile 50 und 60 umfasst. Bei dem Verbindungselement 10 handelt es sich um ein Verbindungselement 10, dessen Schenkel 25, 25' am freien Ende 21 des Grundkörpers 20 unter Bildung eines bogenförmigen Abschnitts 29 ineinander übergehen.

Die Schraube 40 umfasst einen Schraubenkopf 41 sowie einen Schraubenkörper 44. Am zum Schraubenkopf 41 zugewandten Ende 42 weist der Schraubenkörper 44 einen gewindefreien Abschnitt 43 auf. Der der Spitze 46 der Schraube 40 zugewandte Schraubenabschnitt 47 besitzt ein Außengewinde 45. Die Schraube 40 weist einen Übergangsbereich 48 auf, der zwischen dem gewindefreien Abschnitt 43 und dem Gewinde 45 der Schraube 40 ausgebildet ist. Der Übergangsbereich 48 ist absatzartig ausgebildet und bildet eine radial umlaufende Stirnfläche 48'. In dieser Stirnfläche 48' sind gleichmäßig, d.h. mit gleichem Abstand zueinander, vier Einkerbungen 49 ausgebildet.

Beim Bausatzteil 60 handelt es sich um ein Fahrzeugrad. Das Bausatzteil 50 ist hingegen ein Karosserieteil.

Das Bausatzteil 50 weist eine gehäuseartige Aufnahme 51 auf. In die Öffnung 52 der gehäuseartigen Aufnahme 51 kann das freie Ende 21 des Grundkörpers 20 des Verbindungselementes 10 eingeführt werden. Der Anschlag 30, insbesondere die Anschlagsfläche 32, liegt auf dem die Öffnung 52 begrenzenden Randabschnitt 53 auf. Der Querschnitt der Öffnung 52 ist minimal größer als der Querschnitt des Grundkörpers 20, so dass der Grundkörper 20 des Verbindungselementes 10 in die Öffnung 52 eingeführt werden kann.

Die gehäuseartige Aufnahme 51 nimmt den Grundkörper 20 des Verbindungselementes 10 vollständig auf. Da der Anschlag 30 den Grundkörper 20 in seiner Breite b und seiner Länge l überragt, liegt der Anschlag 30 auf dem Randabschnitt 53 auf.

In der gehäuseartigen Aufnahme 51 ist eine Ausnehmung 70 ausgebildet. In diese Ausnehmung 70 des Bausatzteils 50 kann das Rastelement 31 des Verbindungselementes 10 eingeführt werden. Da das Verbindungselement 10 nur in einer Position, und zwar nur derart, dass das Rastelement 31 in der Ausnehmung 70 befindlich ist, in das Bausatzteil 50 eingeführt werden kann, dient das Rastelement 31 zusätzlich als Orientierungselement.

Die gehäuseartige Aufnahme 51 weist eine weitere Öffnung 55 auf. Die Öffnung 55 kann, wie auch die Öffnung 52, auch als Durchbruch bezeichnet werden. Durch die Öffnung 55 ist im zusammengebauten Zustand der Schraubenkörper 44 der Schraube 40 eingeführt (siehe Fig. 5b). Ebenfalls zu erkennen ist eine Gehäuseverlängerung 54. In dieser Gehäuseverlängerung 54 ist insbesondere im zusammengebauten Zustand des Bausatzes die Spitze 46 der Schraube 40 aufgenommen.

Das Außengewinde 54 des Schraubenabschnitts 47 greift in das Innengewinde des Gewindeabschnitts 28 ein. Mit Hilfe des im Vergleich zum Schraubenkörper 44 breiter ausgebildeten Schraubenkopfes 41 kann das Bausatzteil 60 bzw. das Fahrzeugrad mit dem Bausatzteil 50 verbunden werden. Da die Schraube 40 einen gewindefreien Abschnitt 43 aufweist, kann sich das Rad um diesen gewindefreien Abschnitt 43 drehen.

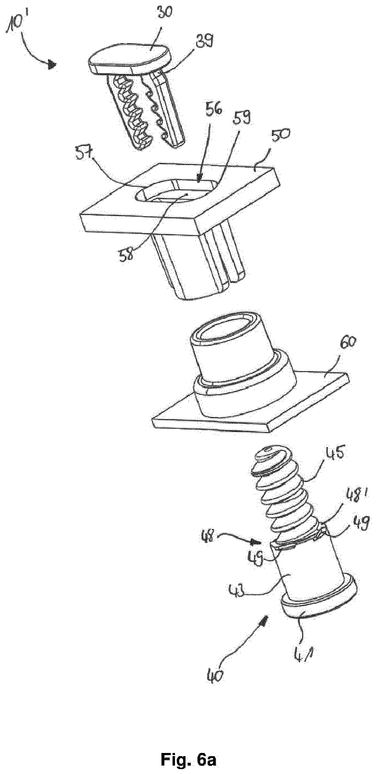

In der Fig. 6a wird die Verbindung eines Verbindungselementes 10', das zwei zahnstangenartig ausgebildete Schenkel 25 und 25' aufweist, mit einem Bausatzteil 50 angedeutet.

Das Bausatzteil 50 weist eine Absenkung 57 auf, die derart ausgebildet ist bzw. eine derartige Form aufweist, dass diese Absenkung 57 den Anschlag 30 des Verbindungselementes 10' aufnimmt. Die Absenkung 57 ist randseitig um eine schlitzförmige Öffnung 56 ausgebildet. Die schlitzförmige Öffnung 56 weist einen derartigen Querschnitt auf, dass der Grundkörper 20 des Verbindungselementes 10' vollständig in die Öffnung 56 einführbar ist. Hierzu ist der Querschnitt der Öffnung 56 minimal größer ausgebildet als der Querschnitt des Grundkörpers 20.

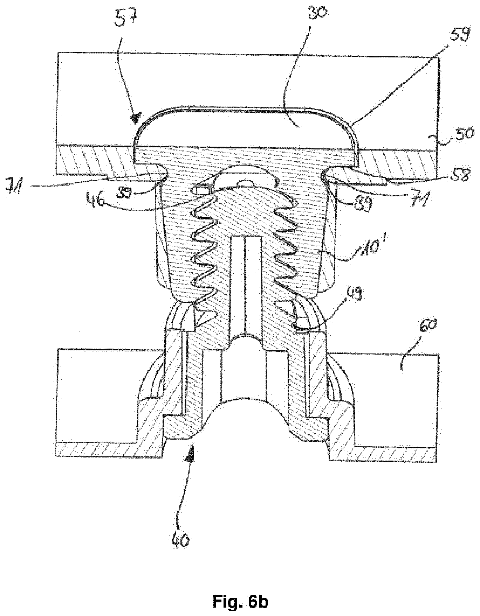

Die Absenkung 57 weist vorzugsweise eine derartige Senktiefe auf, dass der Anschlag 30 vollständig innerhalb der Absenkung 57 liegt (siehe hierzu Fig. 6b). Vorzugsweise schließt die Oberseite 33 bündig mit dem Senkungsrandabschnitt 59 ab. Die Anschlagsfläche 32 des Anschlags 30 liegt auf der Senkungsfläche 58 auf.

Die Schraube 40 weist zwischen dem gewindefreien Abschnitt 43 und dem Gewinde 45 der Schraube 40 einen Übergangsbereich 48 auf, der absatzartig und mit einer radial umlaufenden Stirnfläche 48' mit vier Einkerbungen 49 ausgebildet ist. Mit Hilfe dieser Einkerbungen 49 kann die Schraube 40 zusätzlich mit dem Bausatzteil 60 verrastet werden. Die Einkerbungen 49 sind gleichmäßig, d.h. mit gleichem Abstand zueinander, auf der Stirnfläche 48' verteilt.

Die Einbuchtungen 39 des Verbindungselementes 10' dienen dazu, mit dem Bausatzteil 50 eine verrastende Bindung eingehen zu können. Hierzu weist das Bausatzteil 50 im Öffnungsbereich eine entsprechend komplementäre Formgebung in Form von Ausbuchtungen 71 auf.

### Bezugszeichenliste

- 1: Schlüsselelement
- 2: Kraftübertragungskopf
- 3: Seitenfläche
- 4: Kante
- 5: Schlitz
- 6: Flanken
- 7: Abstützelement
- 8: Schraubelement
- 9: Kraftübernahmekopf
- 10, 10': Verbindungselement
- 20: Grundkörper
- 21: Erstes freies Ende
- 22: Zweites Ende
- 23: Flache Vorderseite
- 24: Flache Rückseite
- 25, 25': Schenkel
- 26: Innenseite Schenkel
- 27: Innenseite Schenkel
- 28: Gewindeabschnitt
- 29: Bogenförmiger Abschnitt
- 30: Anschlag
- 31: Rastelement/Orientierungselement
- 32: Anschlagsfläche
- 33: Oberseite
- 34: Stirnfläche
- 35: Abgerundete Ecke
- 36: Freies Ende Schenkel
- 37: Außenseite
- 38: Gewindeflanke
- 39: Einbuchtung
- 40: Schraube
- 41: Schraubenkopf
- 42: Ende
- 43: Gewindefreier Abschnitt
- 44: Schraubenkörper
- 45: Gewinde
- 46: Spitze
- 47: Schraubenabschnitt
- 48: Übergangsbereich
- 48': Stirnfläche
- 49: Einkerbung
- 50: Bausatzteil
- 51: Gehäuseartige Aufnahme
- 52: Öffnung
- 53: Randabschnitt
- 54: Gehäuseverlängerung
- 55: Öffnung
- 56: Öffnung
- 57: Absenkung
- 58: Senkungsfläche
- 59: Senkungsrandabschnitt
- 60: Bausatzteil
- 70: Ausnehmung Bausatzteil
- 71: Ausbuchtung
- b: Breite Grundkörper
- l: Länge Grundkörper
- A: Gewindeachse
- X: Längserstreckung
- Y: Breitenerstreckung
- Z: Höhenerstreckung

## Patentansprüche

1. Verbindungssystem zum lösbaren Verbinden von Bauteilen, mit einem Schlüsselelement (1), das einen Kraftübertragungskopf (2) aufweist, und einem Schraubelement (8), das einen Kraftübernahmekopf (9) aufweist, die anhand zueinander korrespondierend ausgestalteter Formen des Kraftübertragungskopfes (2) und des Kraftübernahmekopfes (9) bedarfsweise miteinander verbindbar sind,
wobei wenigstens der Kraftübertragungskopf (2) des Schlüsselelementes (1) ein erstes Material aufweist und wenigstens der Kraftübernahmekopf (9) des Schraubelementes (8) ein zweites Material aufweist, wobei das erste Material und das zweite Material derart ausgewählt sind, dass der Kraftübertragungskopf (2) und/oder der Kraftübernahmekopf (9) beim Aufbringen einer Kraft zur Rotation des Schlüsselelementes (1), die größer ist als eine definierbare Maximalkraft, reversibel verformbar sind/ist
**dadurch gekennzeichnet, dass**
der Kraftübertragungskopf (2) des Schlüsselelementes (1) und/oder der Kraftübernahmekopf (9) des Schraubelementes (8) wenigstens einen Schlitz (5) aufweist, wobei der wenigstens eine Schlitz (5) derart ausgestaltet ist, dass sich gegenüberstehenden Flanken (6) jeweils in der dem wenigstens einen Schlitz (5) zugewandten Richtung reversibel verformbar sind.

2. Verbindungssystem nach Anspruch 1,
**dadurch gekennzeichnet, dass**
die reversible Verformung des Kraftübertragungskopfes (2) und/oder des Kraftübernahmekopfes (9) in wenigstens einem Kontaktbereich zwischen dem Kraftübertragungskopf (2) und dem Kraftübernahmekopf (9) erzeugbar ist.

3. Verbindungssystem nach Anspruch 1 oder 2,
**dadurch gekennzeichnet, dass**
das erste Material oder das zweite Material eine geringere Festigkeit aufweist, insbesondere eine geringere Druckfestigkeit und/oder eine geringere Torsionsfestigkeit, als das zweite Material oder das erste Material.

4. Verbindungssystem nach Anspruch 1 oder 2,
**dadurch gekennzeichnet, dass**
das erste Material und das zweite Material identisch sind.

5. Verbindungssystem nach einem der vorhergehenden Ansprüche,
**dadurch gekennzeichnet, dass**
der Kraftübertragungskopf (2) und der Kraftübernahmekopf (9) jeweils wenigstens zwei Seitenflächen (3) aufweisen, wobei Kanten (4) zwischen aneinander angrenzenden Seitenflächen (3) abgerundet oder abgeflacht sind, sodass beim Aufbringen einer Kraft, die größer ist als die definierbare Maximalkraft, eine Rotation des Schlüsselelementes (1), insbesondere des Kraftübertragungskopfes (2), gegenüber dem Schraubelement (8), insbesondere gegenüber dem Kraftübernahmekopf (9), durchführbar ist.

6. Verbindungssystem nach Anspruch 1,
**dadurch gekennzeichnet, dass**
an wenigstens einer der sich gegenüberstehenden Flanken (6) des Kraftübertragungskopfes (2) oder des Kraftübernahmekopfes (9) ein Abstützelement (7) in dem wenigstens einen Schlitz (5) derart angeordnet ist, dass eine reversible Verformung der wenigstens einen Flanke (6) in Richtung des Schlitzes (5) begrenzbar ist.

7. Verbindungssystem nach einem der vorhergehenden Ansprüche,
**dadurch gekennzeichnet, dass**
das Verbindungssystem ferner ein Verbindungselement (10, 10') aufweist.

8. Verbindungssystem nach Anspruch 7,
**dadurch gekennzeichnet, dass**
das Verbindungselement (10, 10') mit einem Grundkörper (20), der ein erstes freies Ende (21) und ein zweites Ende (22) aufweist, mit einem Anschlag (30), welcher mit dem zweiten Ende (22) des Grundkörpers (20) verbunden ist und diesen in seiner Breite (b) und/oder seiner Länge (l) überragt, wobei der Grundkörper (20) eine flache Vorderseite (23) und eine mit der Vorderseite (23) deckungsgleiche, flache Rückseite (24) sowie zwei gegenüberliegende Schenkel (25; 25') aufweist, wobei die Schenkel (25; 25') auf ihren einander zugewandten Innenseiten (26; 27) wenigstens einen Gewindeabschnitt (28) tragen.

9. Verbindungssystem nach Anspruch 8,
**dadurch gekennzeichnet, dass**
die Schenkel (25; 25') am freien Ende (21) des Grundkörpers (20) unter Bildung eines bogenförmigen Abschnitts (29) ineinander übergehen.

10. Verbindungssystem nach Anspruch 8 oder 9,
**dadurch gekennzeichnet, dass**
eine Gewindeachse (A) des wenigstens einen Gewindeabschnitts (28) parallel zur Breitenerstreckung (Y) des Anschlags (30) verläuft.

11. Verbindungssystem nach einem der Ansprüche 8 bis 10,
**dadurch gekennzeichnet, dass**
der Gewindeabschnitt (28) zur Hälfte ein Rechtsgewinde und zur anderen Hälfte ein Linksgewinde aufweist.

12. Verbindungssystem nach Anspruch 10 oder 11,
**dadurch gekennzeichnet, dass**
die Gewindeachse (A) des wenigstens einen Gewindeabschnitts (28) senkrecht zur Breitenerstreckung (Y) und senkrecht zur Längserstreckung (X) des Anschlags (30) verläuft.

13. Verbindungssystem nach einem der Ansprüche 8 bis 12,
**dadurch gekennzeichnet, dass**
die Schenkel (25; 25') zahnstangenartig ausgebildet sind.

14. Verbindungssystem nach einem der Ansprüche 8 bis 13,
**dadurch gekennzeichnet, dass**
wenigstens ein Schenkel (25; 25') auf der vom Gewindeabschnitt (28) wegweisenden Außenfläche (37) eine Einbuchtung (39) und/oder einen Einschnitt aufweist.

15. Verbindungssystem nach einem der Ansprüche 8 bis 14,
**dadurch gekennzeichnet, dass**
auf der Vorderseite (23) und/oder auf der Rückseite (24) des Grundkörpers (20) ein Rastelement (31) und/oder ein Orientierungselement ausgebildet ist.

16. Bausatz, mit einem Verbindungssystem nach einem der vorhergehenden Ansprüche und mit wenigstens zwei lösbar zu verbindenden Bausatzteilen (50; 60).

17. Verwendung des Bausatzes nach Anspruch 16 oder des Verbindungssystems nach einem der Ansprüche 1 bis 15, zum lösbaren Zusammensetzen eines technischen oder funktionalen oder modularen Bausatzes.

## Claims

1. A connection system for releasably connecting components comprising a key element (1) having a force transferring head (2) and a screw element (8) having a force receiving head (9) able to be connected together as needed by the shapes of the force transferring head (2) and the force receiving head (9) being designed so as to correspond to one another, wherein at least the force transferring head (2) of the key element (1) exhibits a first material and at least the force receiving head (9) of the screw element (8) exhibits a second material, wherein the first material and the second material are selected such that the force transferring head (2) and/or the force receiving head (9) are/is reversibly deformable upon application of a force for rotating the key element (1) which is greater than a definable maximum force,
**characterized in that**
the force transferring head (2) of the key element (1) and/or the force receiving head (9) of the screw element (8) comprises at least one slot (5), wherein the at least one slot (5) is designed such that opposing flanks (6) are in each case reversibly deformable toward the at least one slot (5).

2. The connection system according to claim 1,
**characterized in that**
the reversible deformation of the force transferring head (2) and/or the force receiving head (9) can be generated in at least one contact region between the force transferring head (2) and the force receiving head (9).

3. The connection system according to claim 1 or 2,
**characterized in that**
the first material or the second material has a lower strength, in particular a lower compressive strength and/or a lower torsional strength, than the second material or the first material.

4. The connection system according to claim 1 or 2,
**characterized in that**
the first material and the second material are identical.

5. The connection system according to one of the preceding claims,
**characterized in that**
the force transferring head (2) and the force receiving head (9) each have at least two lateral surfaces (3), wherein edges (4) between adjacent lateral surfaces (3) are rounded off or flattened such that upon application of a force greater than the definable maximum force, the key element (1), in particular the force transferring head (2), can rotate with respect to the screw element (8), in particular with respect to the force receiving head (9).

6. The connection system according to claim 1,
**characterized in that**
a support element (7) is arranged in the at least one slot (5) on at least one of the opposing flanks (6) of the force transferring head (2) or the force receiving head (9) such that a reversible deformation of the at least one flank (5) can be delimited in the direction of the slot (5).

7. The connection system according to one of the preceding claims,
**characterized in that**
the connection system further comprises a connecting element (10, 10').

8. The connection system according to claim 7,
**characterized in that**
the connecting element (10, 10') has a base body (20) with a first free end (21) and a second end (22) which has a stop (30) connected to the second end (22) of the base body (20) extending beyond same in terms of its width (b) and/or length (I), wherein the base body (20) has a flat front face (23) and a flat rear face (24) congruent with the front face (23) as well as two opposing limbs (25, 25'), wherein the limbs (25, 25') have at least one threaded section (28) on their facing inner surfaces (26; 27).

9. The connection system according to claim 8,
**characterized in that**
the limbs (25, 25') merge into each other at the free end (21) of the base body (20) to form a curved section (29).

10. The connection system according to claim 8 or 9,
**characterized in that**
a threaded axis (A) of the at least one threaded section (28) runs parallel to the width extension (Y) of the stop (30).

11. The connection system according to one of claims 8 to 10,
**characterized in that**
the threaded section (28) exhibits a right-hand thread over half and a lefthand thread over the other half.

12. The connection system according to claim 10 or 11,
**characterized in that**
the threaded axis (A) of the at least one threaded section (28) runs perpendicular to the width extension (Y) and perpendicular to the longitudinal extension (X) of the stop (30).

13. The connection system according to one of claims 8 to 12,
**characterized in that**
the limbs (25; 25') are designed in the manner of a gear rack.

14. The connection system according to one of claims 8 to 13,
**characterized in that**
at least one limb (25; 25') comprises a recess (39) and/or a notch on the outer surface (37) pointing away from the threaded section (28).

15. The connection system according to one of claims 8 to 14,
**characterized in that**
a latching element (31) and/or orientation element is formed on the front face (23) and/or the rear face (24) of the base body (20).

16. An assembly kit having a connection system according to one of the preceding claims and at least two assembly kit components (50; 60) to be releasably connected.

17. The use of the assembly kit according to claim 16 or the connection system according to one of claims 1 to 15 for detachably assembling a technical or functional or modular assembly kit.

## Revendications

1. Système de liaison pour relier de manière amovible des composants, comportant un élément formant clé (1) pourvu d'une tête de transmission de force (2) et un élément formant vis (8) pourvu d'une tête de reprise de force (9), qui sont susceptibles d'être reliés l'un à l'autre en cas de besoin par des formes conçues mutuellement en correspondance de la tête de transmission de force (2) et de la tête de reprise de force (9),
dans lequel
au moins la tête de transmission de force (2) de l'élément formant clé (1) présente un premier matériau et au moins la tête de reprise de force (9) de l'élément formant vis (8) présente un second matériau,
le premier matériau et le second matériau sont choisis de telle sorte que la tête de transmission de force (2) et/ou la tête de reprise de force (9) est/sont déformable(s) de façon réversible lors de l'application d'une force de rotation de l'élément formant clé (1) qui est supérieure à une force maximale définissable,
**caractérisé en ce que**
la tête de transmission de force (2) de l'élément formant clé (1) et/ou la tête de reprise de force (9) de l'élément formant vis (8) présente au moins une fente (5),
ladite au moins une fente (5) est conçue de telle sorte que des flancs (6) mutuellement opposés sont chacun déformables de façon réversible dans la direction tournée vers ladite au moins une fente (5).

2. Système de liaison selon la revendication 1,
**caractérisé en ce que**
la déformation réversible de la tête de transmission de force (2) et/ou de la tête de reprise de force (9) peut être engendrée dans au moins une zone de contact entre la tête de transmission de force (2) et la tête de reprise de force (9).

3. Système de liaison selon la revendication 1 ou 2,
**caractérisé en ce que**
le premier matériau ou le second matériau présente une résistance inférieure, en particulier une résistance à la pression et/ou une résistance à la torsion inférieures à celle du second matériau ou du premier matériau.

4. Système de liaison selon la revendication 1 ou 2,
**caractérisé en ce que**
le premier matériau et le second matériau sont identiques.

5. Système de liaison selon l'une des revendications précédentes,
**caractérisé en ce que**
la tête de transmission de force (2) et la tête de reprise de force (9) présentent chacune au moins deux surfaces latérales (3),
des arêtes (4) entre des surfaces latérales (3) mutuellement adjacentes sont arrondies ou aplaties, de sorte que lors de l'application d'une force qui est supérieure à la force maximale définissable, il est possible d'exécuter une rotation de l'élément formant clé (1), en particulier de la tête de transmission de force (2), par rapport à l'élément formant vis (8), en particulier par rapport à la tête de reprise de force (9).

6. Système de liaison selon la revendication 1,
**caractérisé en ce que**
sur l'un au moins des flancs (6) mutuellement opposés de la tête de transmission de force (2) ou de la tête de reprise de force (9), un élément d'appui (7) est agencé dans ladite au moins une fente (5) de telle sorte qu'une déformation réversible dudit au moins un flanc (6) en direction de la fente (5) peut être limitée.

7. Système de liaison selon l'une des revendications précédentes,
**caractérisé en ce que**
le système de liaison présente en outre un élément de liaison (10, 10').

8. Système de liaison selon la revendication 7,
**caractérisé en ce que**
l'élément de liaison (10, 10') comprend un corps de base (20) qui présente une première extrémité (21) et une seconde extrémité (22), ainsi qu'une butée (30) qui est reliée à la seconde extrémité (22) du corps de base (20) et qui dépasse celui-ci quant à sa largeur (b) et/ou à sa longueur (l), le corps de base (20) présente une face avant plate (23) et une face arrière plate (24) coïncidente avec la face avant (23), ainsi que deux branches (25 ; 25') opposées,
les branches (25 ; 25') portent au moins une portion à pas de vis (28) sur leurs faces intérieures (26 ; 27) tournées l'une vers l'autre.

9. Système de liaison selon la revendication 8,
**caractérisé en ce que**
les branches (25 ; 25') se transforment l'une en l'autre à l'extrémité libre (21) du corps de base (20) en formant une portion arquée (29).

10. Système de liaison selon la revendication 8 ou 9,
**caractérisé en ce que**
un axe (A) du pas de vis de ladite au moins une portion à pas de vis (28) s'étend parallèlement à l'extension en largeur (Y) de la butée (30).

11. Système de liaison selon la revendication 8 à 10,
**caractérisé en ce que**
la portion à pas de vis (28) présente en moitié un pas de vis à droite et en moitié un pas de vis à gauche.

12. Système de liaison selon la revendication 10 ou 11,
**caractérisé en ce que**
l'axe (A) du pas de vis de ladite au moins une portion à pas de vis (28) s'étend perpendiculairement à l'extension en largeur (Y) et perpendiculairement à l'extension en longueur (X) de la butée (30).

13. Système de liaison selon l'une des revendications 8 à 12,
**caractérisé en ce que**
les branches (25 ; 25') sont réalisées en forme de crémaillères.

14. Système de liaison selon l'une des revendications 8 à 13,
**caractérisé en ce que**
au moins une branche (25 ; 25') présente une encoche (39) et/ou une entaille sur la surface extérieure (37) détournée de la portion à pas de vis (28).

15. Système de liaison selon l'une des revendications 8 à 14,
**caractérisé en ce que**
un élément d'enclenchement (31) et/ou un élément d'orientation est réalisé sur la face avant (23) et/ou sur la face arrière (24) du corps de base (20).

16. Kit comportant un système de liaison selon l'une des revendications précédentes et au moins deux composants de kit (50 ; 60) à relier de façon amovible.

17. Utilisation du kit selon la revendication 16 ou du système de liaison selon l'une des revendications 1 à 15 pour l'assemblage amovible d'un kit technique ou fonctionnel ou modulaire.
